# EUROPEAN PATENT SPECIFICATION

(11) **EP 3 892 571 B1**
(45) Date of publication and mention of the grant of the patent: **10.01.2024**
(21) Application number: 21020174.5
(22) Date of filing: 31.03.2021
(51) Int. Cl.: B65G 17/16, B65G 47/40

(54) **REVERSIBLE BUCKET ELEVATOR**
UMKEHRBARES BECHERWERK
ÉLÉVATEUR À GODET RÉVERSIBLE

(30) Priority: 07.04.2020 ES 202030286
(43) Date of publication of application: 13.10.2021
(73) Proprietor: Jose Borrell S.A., 03700 Dénia (Alicante) (ES)
(72) Inventor: ROIG BORRELL, Jose Vicente, 03700 Denia (Alicante) (ES); PASTOR MARTI, Francisco Esteban, 03700 Denia (Alicante) (ES)
(74) Representative: Martin Alvarez, Juan Enrique

(56) References cited:
- DE-C1- 3 834 947
- DE-U- 7 443 312
- FR-A1- 2 513 488
- US-A1- 2001 050 210
- US-A1- 2004 094 390

## Description

### Technical field of the invention

The present invention belongs to the technical field of bucket elevators, which comprise a frame with an endless inner lift conveyor to which there are coupled a plurality of buckets apt to contain and lift a load to a higher unloading area and which presents tipping means for said buckets.

### Background to the invention

Nowadays bucket elevators based on parallel endless chains with buckets coupled thereto and that allow transport and lifting of a certain product to dispose it at a higher point are very much used within a production process.

The buckets are configured to keep a horizontal position that allows the safe transport of the product and its coupling to the transporting chains must be such that given the moment when the bucket reaches the unloading area, it is possible the controlled tipping thereof to accomplish the product unloading.

In the daily operation and practice in the production facilities, there are situations in which it is required a change in the buckets' sense of direction in order to fulfil operations of filling and unloading or to modifications on the sense of direction due to restructuring of the product organization.

Initially, the buckets were designed with asymmetric configurations that facilitated the unloading in one sense, i.e., that for which it was designed and thus, in principle, this made impossible a possible change of sense of direction in the production line.

In order to adapt to the new necessities that were required, some buckets appeared that opened the possibility to change in the sense of advancement of the lines, although they still present drawbacks, given that they require new elements that allow the change of sense and the correct bucket tipping in both senses of advancement. In many occasions they need human intervention so as to reverse the buckets and, in any case, the results are more complex lines and mechanisms.

As an example of the state-of-the-art, the following reference documents can be mentioned H05213425, US4009531 and ES225902.

The reference document H05213425 proposes a bucket elevator for its use in material handling, wherein the buckets present as an improvement a spoon shape that allows the bidirectional conveyance thereof. More specifically, this invention provides a method of unloading a spoon-bucket when the device is advancing as well as when the device is reversing, whereas a seal is kept between adjacent spoon-buckets in the moment of loading, to avoid material loss.

Nevertheless, the functioning of said bucket is based in the contact of an element of the bucket with an obstacle located in its path to cause the tipping thereof, but because it is an asymmetric bucket, it requires the location of two obstacles to activate the tipping in each sense of movement, respectively.

This way of proceeding complicates the installation and makes it compulsory to provide a different unloading area depending on the sense of advancement of the buckets, thus requiring the facility to comprise duplicated receiving means.

The second reference document US4009531 defines a bucket wheel or apparatus to pick up bulk materials, consisting of a plurality of buckets mounted on a mobile endless support, such as a wheel, that comprises an actuating device that allows the propulsion thereof in opposite directions.

Each bucket consists of a structure with two apertures that can pivot about a rotation axis and present two final tipping positions. Each aperture of the bucket assembly is located in active or inactive position automatically and without staff intervention. When the wheel turns, the buckets collide with the material heap and the resistance of the products automatically leads the bucket to the active position, i.e., the receiving aperture facing the material is open at its maximum.

Even though the bucket here is symmetric, the tipping is accomplished by gravity. Depending on the sense of the wheel turning, the material is loaded through an aperture or through the other. It is oriented for the specific case of a transport wheel, such that is offers no solution to the case of linear bucket elevators in which the load must be lifted until a certain height and unload it in a determined area.

In the case of reference document ES225902, this defines a reversible bucket for proofing chambers for bakeable doughs. It refers to an oscillating bucket system formed by a flexible fabric sleeve, which does not require any guiding device along its path inside the chamber, except in the unloading station in which the bucket must be tipped. In this case, the bucket system requires a pushing mechanism in one sense or the other in order to cause the bucket tipping in the unloading area, although the document does not specify said mechanism. Nevertheless, it is clear that several additional elements are needed, which complicates the facility.

US2004/094390 A1 describes a bucket conveyor with a frame with at least a first stretch with a first and second ends, wherein the second end is located at a higher point than the first end and in which interior there is an endless lifting conveyor to which there are coupled a plurality of buckets apt to contain and lift the load and which presents at least an unloading area which presents bucket tipping means. Each bucket is formed by a symmetric concave body with an upper open end, two connection sides to the conveyor, equal and parallel between them, and two opposing sides located between the connection sides, wherein each bucket comprises coupling means to the conveyor formed by a connecting shaft located in the symmetry axis of the connection sides, proximal to the bucket upper end and means for adjusting to the tipping means formed by a guide located on the connection sides, which presents a curved shape whose major axis is located in the symmetry axis of the connection sides, with a first end proximal to the bucket upper end and a second opposing end. The buckets connecting shaft is contained in the guide major axis. The tipping means are formed by a longitudinal element parallel to the conveyor with a surface oriented towards said conveyor which presents a curved symmetric and convex to the conveyor profile, with an active tipping position such that the bucket guide contact with said curved profile generates a tipping thereof in the advancement sense, until reaching a bucket maximum tipping in the central area of said curved profile. FR 2,513,488 A1 describes a bucket conveyor adapted to supress bucket oscillations after the buckets have released their load.

It is not known in the state-of-the-art any bucket elevator that allows the change on the sense of advancement thereof without implying complications in the facility or previous manual modifications and that allows a similar operation in both senses.

### Description of the invention

The reversible bucket elevator herein presented, comprises the features of claim 1.

With the bucket elevator herein proposed a significant improvement of the state-of-the-art is achieved.

This is because a solution is achieved in which the bucket elevator allows a reversible operation thereof, i.e., in an advancement sense or in the opposite sense, to be able to adapt to the production demands thus increasing the efficacy of the process.

This reversibility is achieved is a simple way and without needing auxiliary elements or facilities, given that thanks to the buckets' symmetry and to the elliptic shape of the means for adjusting to the tipping means, also symmetrical, the tipping is accomplished in the same unloading area in both senses of advancement and with the same tipping means. This significantly simplifies the facility and favours a fluid operation in both senses, with a great effectivity and a cost reduction.

### Brief description of the drawings

In order to aid to a better understanding of the invention features, according to a preferred realisation example thereof, there is provided as integral part of said description, a series of drawings wherein, with illustrative and non-limiting character, the following has been represented:
Figure 1.- Shows a schematic sectional view of a bucket elevator, for a preferred embodiment of the invention.
Figure 2.- Shows a view of detail A of Figure 1.
Figure 3.- Shows a perspective view of a bucket, for a preferred embodiment of the invention.

### Detailed description of a preferred embodiment of the invention

In the view of the figures provided, it can be observed how, in a preferred embodiment of the invention, the bucket elevator herein proposed comprises a frame (3) which presents at least a first stretch (1) with a first and second ends, wherein the second end (1.1) is located at a higher point than the first end and in which interior presents an endless lifting conveyor (4) to which there are coupled a plurality of buckets (5) apt to contain and lift a load, with at least an unloading area that presents said buckets (5) tipping means.

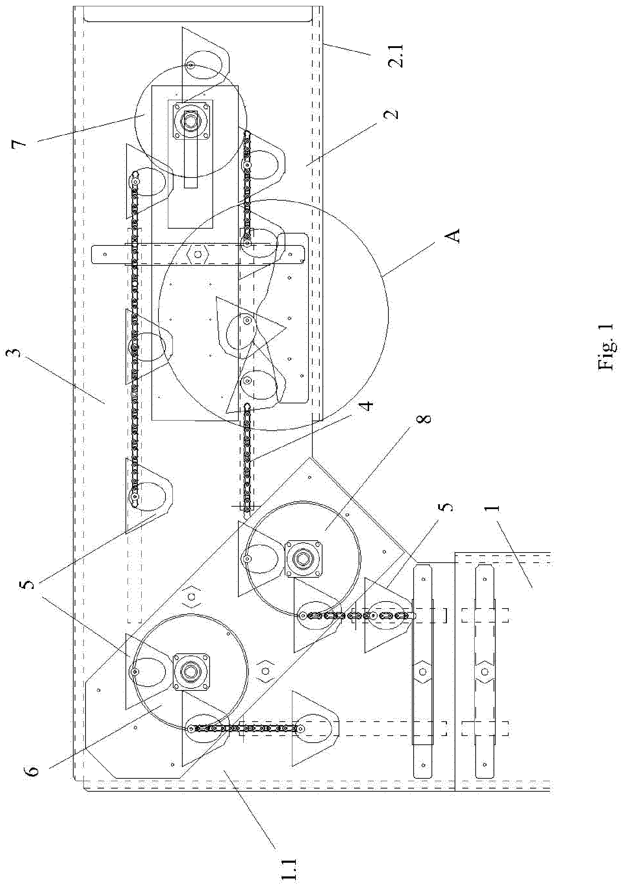

In this preferred embodiment of the invention, as shown in Figure 1, the bucket elevator comprises at least two end drums, being a first drum (not shown in the Figures) located in the first end of the first stretch (1) and a second drum (6) arranged at the second end (1.1) thereof, wherein both first and second drums are connected by means of the conveyor (4) and at least one of them is connected to rotation means.

Furthermore, this bucket elevator comprises a second stretch (2), located following the first stretch (1) and forming an angle therewith, which is 90° in this case, being in this case the first stretch (1) vertical and the second stretch (2) horizontal and, presents a third drum (7) arranged at the end (2.1) of said second stretch (2), as shown in Figure 1.

By having this elevator this second stretch (2), the first stretch (1) thereof presents a second additional drum (8) in the second end (1.1) of the first stretch (1), In order to be able to close the endless conveyor (4) around said first and second stretches (1, 2).

In the reversible bucket elevator herein presented, each bucket (5) is formed by a concave symmetric body with an open upper end (9), two connection sides (10) to the conveyor, equal and parallel between them and two sides (11) opposed to each other and located between the connection sides (10).

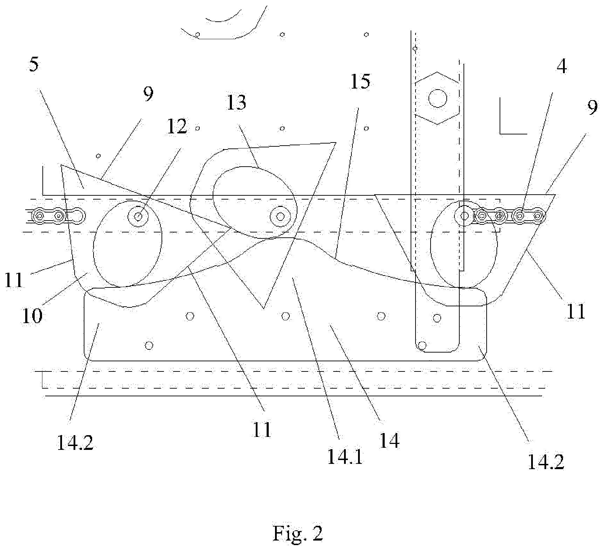

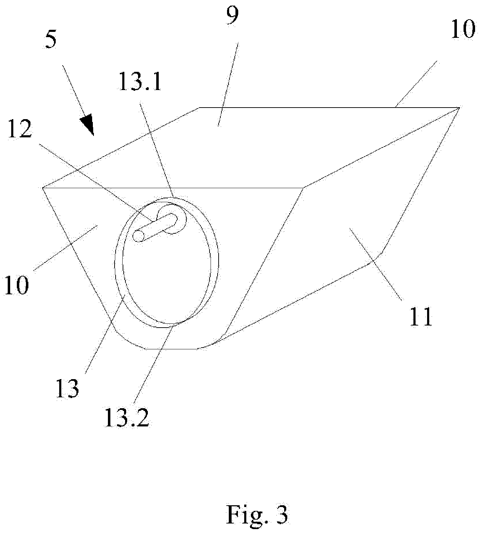

As it can be observed in Figures 2 and 3, each bucket (5) comprises coupling means to the conveyor formed by a connecting shaft (12) located in the symmetry axis of the connection sides (10), proximal to the upper end (9) of the bucket (5).

Likewise, each bucket (5) comprises means for adjusting to the tipping means formed by a guide (13) located on the connection sides, which presents an ellipse shape whose major axis is located in the symmetry axis of the connection sides (10), with a first end (13.1) proximal to the upper bucket (5) end (9) and an opposite second end (13.2), wherein the bucket (5) connecting shaft (12) is contained in the ellipse major axis.

On another side, as shown in Figure 2, the tipping means are formed by a longitudinal element (14) parallel to the conveyor (4) with a surface oriented towards said conveyor (4) that presents a curved symmetric and convex to said conveyor (4) profile (15).

This tipping means present an active tipping position such that the contact of a bucket guide (13) with said curved profile (15), in both bucket (5) advancement senses, generates a progressive tipping thereof in the advancement sense, until reaching a bucket (5) maximum tipping in the central area (14.1) of said curved profile (15).

In this preferred embodiment of the invention, the curved profile (15) of the tipping means presents a separation distance to the bucket (5) connecting shaft (12) that, in its ends (14.2) is equal or greater than the distance between said connecting shaft (12) and the second end (13.2) of the major guide (13) axis and, in the central area (14.1) of said curved profile (15), is less than half of the said guide (13) minor axis.

In this preferred embodiment of the invention, as shown in Figures 1 and 2, the longitudinal element (14) is located proximal to the end (2.1) of the second stretch (2) of the conveyor (4), but in other embodiments it may be located in any area of the second stretch (2) or of the first stretch (1), always arranging the curved profile (15) of the longitudinal element (14) oriented towards the conveyor (14).

As it is shown in Figure 1, the bucket (5) connection sides (12) present a frustoconical section.

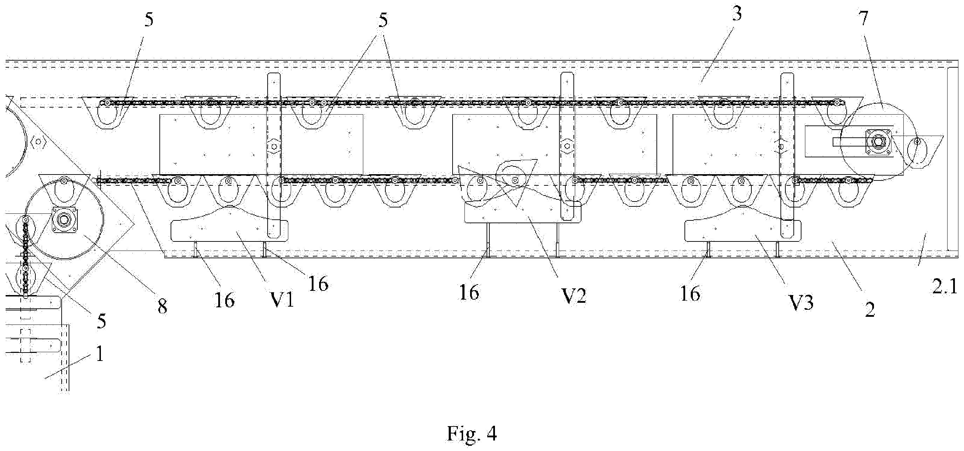

In this memory it is proposed a second embodiment in which, contrarily to the first embodiment, the bucket elevator comprises at least two unloading areas. More specifically, as it is shown in Figure 4, it comprises three unloading areas, with corresponding tipping means in each one, i.e., a first, second and third tipping means (V1, V2, V3).

Said tipping means present activation/deactivation means formed by a displacement mechanism thereof with respect of the frame (3) from the active position in which there is contact of the curved profile 915) with the bucket (5) guide (13) until a passive position in which the tipping means are arranged further away from the conveyor (4), thus avoiding the contact thereof with the bucket (5) guide (13).

In this way, in Figure 4 it can be observed that first and third tipping means (V1, V3) are in a passive position and there is no contact of the curved profile (15) of the longitudinal element (14) thereof with the bucket (5) guide (13), whereas in the second tipping means (V2) are in an active position in which there is contact and therefore the buckets (5) tipping is caused upon passing along said unloading area.

In this second preferred embodiment of the invention, the displacement mechanism (16) of the tipping means comprises a mechanical actuator, specifically a pneumatic actuator. In other embodiments it may be an electric actuator, by spindle or any other similar one. Likewise, in other embodiments said displacement mechanism (16) of the tipping means may comprise a manual actuator.

The described embodiments constitute only examples of the present invention, therefore specific details, terms and phrases used in the present memmory do not need to be considered as limiting, but they must be only understood as a basis for the claims and as a representative basis that provides an understandable description and enough information to the skilled person to implement the present invention.

## Claims

1. Reversible bucket elevator, allowing a reversible operation thereof, in an advancement sense or in the opposite advancement sense, comprising a frame (3) with at least a first stretch (1) with a first and second ends, wherein the second end (2) is located at a higher point than the first end and in which interior there is an endless lifting conveyor (4) to which there are coupled a plurality of buckets (5) apt to contain and lift the load and which presents at least an unloading area which presents bucket (5) tipping means, wherein each bucket (5) is formed by a symmetric concave body with an upper open end (9), two connection sides (10) to the conveyor (4), equal and parallel between them, and two opposing sides (11) located between the connection sides (10), wherein each bucket comprises
- coupling means to the conveyor (4) formed by a connecting shaft (12) located in the symmetry axis of the connection sides (10), proximal to the bucket (5) upper end (9) and,
- means for adjusting to the tipping means formed by a guide (13) located on the connection sides (10), which presents an ellipse shape whose major axis is located in the symmetry axis of the connection sides (10), with a first end (13.1) proximal to the bucket (5) upper end (9) and a second opposing end (13.2), wherein the buckets (5) connecting shaft (12) is contained in the guide major axis and, wherein;
- the tipping means are formed by a longitudinal element (14) parallel to the conveyor (4) with a surface oriented towards said conveyor which presents a curved symmetric and convex to the conveyor (4) profile (15), with an active tipping position such that the bucket (5) guide (13) contact with said curved profile (15), in both bucket (5) advancement senses, generates a progressive tipping thereof in the advancement sense, until reaching a bucket (5) maximum tipping in the central area (14.1) of said curved profile (15).

2. Reversible bucket elevator, according to claim 1, **characterised in that** in the active tipping position the curved profile (15) of the tipping means presents a separation distance to the bucket (5) connecting shaft (12) such that, in its ends (14.2), is equal or greater than the distance between said connecting shaft (12) and the second end (13.2) of the guide major axis (13) and, in the central area (14.1) of said curved profile (15), is less than half the said guide (13) minor axis.

3. Reversible bucket elevator, according to any preceding claim, **characterised in that** it comprises at least two unloading areas, with tipping means in each one, wherein said tipping means present activation/deactivation means formed by a displacement mechanism thereof with respect of the frame (3) from the active position in which there is contact between the curved profile (15) with the bucket (5) guide (13) until a passive position in which the tipping means are arranged further away from the conveyor (4), avoiding the contact thereof with the bucket (5) guide (13).

4. Reversible bucket elevator, according to claim 3, **characterised in that** the displacement mechanism of the tipping means comprises a manual actuator.

5. Reversible bucket elevator, according to claim 3, **characterised in that** the displacement mechanism of the tipping means comprises a mechanical actuator.

6. Reversible bucket elevator, according to any preceding claim, **characterised in that** the bucket (5) connection sides (10) present a frustoconical section.

7. Reversible bucket elevator, according to any preceding claim, **characterised in that** the first stretch (1) comprises at least two end drums being a first drum located in the first end and a second drum (6) located in the second end (1.1) thereof, wherein both first and second drums are connected by the bucket (5) conveyor (4) and at least one of them is connected to rotating means.

8. Reversible bucket elevator, according to claim 7, **characterised in that** it comprises at least a second stretch (2) located following the first stretch (1), that forms an angle therewith and which comprises a third drum (7) located in the end (2.1) of said second stretch (2).

9. Reversible bucket elevator, according to claim 8, **characterised in that** it comprises at least a second additional drum (8) in the second end (1.1) of the first stretch (1).

10. Reversible bucket elevator, according to claim 8 or 9, **characterised in that** the second stretch (2) is horizontal.

11. Reversible bucket elevator, according to any preceding claim, **characterised in that** the first stretch (1) is vertical.

## Patentansprüche

1. Reversibles Becherwerk, das einen reversiblen Betrieb desselben in Vorschubrichtung oder in entgegengesetzter Vorschubrichtung ermöglicht, umfassend einen Rahmen (3) mit mindestens einer ersten Trasse (1) mit einem ersten und einem zweiten Ende, wobei das zweite Ende (2) an einem höheren Punkt als das erste Ende angeordnet ist und in dessen Inneren sich ein Stetigförderer (4) befindet, an den eine Vielzahl von Bechern (5) gekoppelt ist, die die Last aufnehmen und anheben können und die mindestens einen Entladebereich aufweisen, der eine Kippvorrichtung für den Becher (5) aufweist, wobei jeder Becher (5) durch einen symmetrischen konkaven Körper mit einem oberen offenen Ende (9), zwei Verbindungsseiten (10) zum Förderer (4), die gleich und parallel zueinander sind, und zwei gegenüberliegenden Seiten (11), die sich zwischen den Verbindungsseiten (10) befinden, gebildet wird, wobei jeder Becher
- Kupplungsvorrichtungen am Förderer (4) umfasst, die durch eine Verbindungswelle (12) gebildet werden, die sich in der Symmetrieachse der Verbindungsseiten (10) proximal zum oberen Ende (9) des Bechers (5) befindet, und
- Vorrichtungen zum Einstellen auf die Kippvorrichtung, die von einer Führung (13) gebildet wird, die sich an den Verbindungsseiten (10) befindet und eine Ellipsenform aufweist, deren Hauptachse sich in der Symmetrieachse der Verbindungsseiten (10) befindet, mit einem ersten Ende (13.1), das dem oberen Ende (9) der Schaufel (5) proximal ist, und einem zweiten gegenüberliegenden Ende (13.2), wobei die Schaufel (5), die die Welle (12) verbindet, in der Führungshauptachse enthalten ist und wobei;
- die Kippvorrichtungen von einem Längselement (14) parallel zum Förderer (4) mit einer zum Förderer gerichteten Oberfläche gebildet sind, die ein gewölbtes symmetrisches und zum Förderer (4) konvexes Profil (15) aufweist, mit einer aktiven Kippposition, so dass die Becher (5) -Führung (13) in Kontakt mit dem gewölbten Profil (15) an beiden Becher (5) -Vorschubrichtungen ein progressives Kippen in Vorschubrichtung erzeugt, bis eine maximale Kippung des Bechers (5) im mittleren Bereich (14.1) des gewölben Profils (15) erreicht wird.

2. Reversibles Becherwerk nach Anspruch 1, **dadurch gekennzeichnet, dass** das gewölbte Profil (15) der Kippvorrichtung in der aktiven Kippposition einen solchen Abstand zur Verbindungswelle (12) des Bechers (5) aufweist, dass er an seinen Enden (14.2) gleich oder größer als der Abstand zwischen der Verbindungswelle (12) und dem zweiten Ende (13.2) der Hauptachse (13) der Führung ist und im mittleren Bereich (14.1) des gewölbten Profils (15) kleiner als die Hälfte der Nebenachse der Führung (13) ist.

3. Reversibles Becherwerk nach einem der vorhergehenden Ansprüche, **dadurch gekennzeichnet, dass** es mindestens zwei Entladebereiche mit jeweils einer Kippvorrichtung umfasst, wobei die Kippvorrichtung ein Aktivierungs-/Deaktivierungsmittel aufweist, das durch einen Verschiebemechanismus desselben in Bezug auf den Rahmen (3) von der aktiven Position, in der ein Kontakt zwischen dem gewölbten Profil (15) und der Führung (13) des Bechers (5) besteht, bis zu einer passiven Position, in der die Kippvorrichtungen weiter vom Förderer (4) entfernt angeordnet sind, gebildet wird, wodurch dessen Kontakt mit der Führung (13) des Bechers (5) vermieden wird.

4. Reversibles Becherwerk nach Anspruch 3, **dadurch gekennzeichnet, dass** der Verschiebemechanismus der Kippvorrichtung einen manuellen Aktuator umfasst.

5. Reversibles Becherwerk nach Anspruch 3, **dadurch gekennzeichnet, dass** der Verschiebemechanismus der Kippvorrichtung einen mechanischen Aktuator umfasst.

6. Reversibles Becherwerk nach einem der vorhergehenden Ansprüche, **dadurch gekennzeichnet, dass** die Verbindungsseiten (10) des Bechers (5) einen kegelstumpfförmigen Abschnitt aufweisen.

7. Umkehrbares Becherwerk nach einem der vorhergehenden Ansprüche, **dadurch gekennzeichnet, dass** die erste Trasse (1) mindestens zwei Endtrommeln umfasst, wobei sich eine erste Trommel am ersten Ende befindet, und sich eine zweite Trommel (6) am zweiten Ende (1.1) davon befindet, wobei sowohl die erste als auch die zweite Trommel durch den Becherwerk (5) -Förderer (4) verbunden sind und mindestens eine davon mit Drehvorrichtungen verbunden ist.

8. Reversibles Becherwerk nach Anspruch 7, **dadurch gekennzeichnet, dass** es mindestens eine zweite Trasse (2) umfasst, die sich an die erste Trasse (1) anschließt, mit dieser einen Winkel bildet und eine dritte Trommel (7) umfasst, die sich am Ende (2.1) der zweiten Trasse (2) befindet.

9. Reversibles Becherwerk nach Anspruch 8, **dadurch gekennzeichnet, dass** es mindestens eine zweite zusätzliche Trommel (8) am zweiten Ende (1.1) der ersten Trasse (1) umfasst.

10. Reversibles Becherwerk nach Anspruch 8 oder 9, **dadurch gekennzeichnet, dass** die zweite Trasse (2) horizontal ist.

11. Reversibles Becherwerk nach einem der vorhergehenden Ansprüche, **dadurch gekennzeichnet, dass** die erste Trasse (1) vertikal ist.

## Revendications

1. Élévateur à godets réversible, permettant un fonctionnement réversible de celui-ci, dans un sens d'avancement ou dans le sens d'avancement opposé, comprenant un cadre (3) avec au moins un premier tronçon (1) avec une première et une seconde extrémité, dans lequel la seconde extrémité (2) est située à un point plus élevé que la première extrémité et dans lequel se trouve un convoyeur de levage sans fin (4) auquel sont couplés une pluralité de godets (5) aptes à contenir et à soulever la charge et qui présente au moins une zone de déchargement qui présente des moyens de basculement du godet (5), dans lequel chaque godet (5) est formé par un corps concave symétrique avec une extrémité supérieure ouverte (9), deux côtés de connexion (10) au convoyeur (4), égaux et parallèles entre eux, et deux côtés opposés (11) situés entre les côtés de connexion (10), dans lequel chaque godet comprend
- des moyens de couplage au convoyeur (4) formés par un arbre de connexion (12) situé dans l'axe de symétrie des côtés de connexion (10), à proximité de l'extrémité supérieure (9) du godet (5) et,
- des moyens d'ajustement aux moyens de basculement formés par un guide (13) situé sur les côtés de connexion (10), qui présente une forme d'ellipse dont l'axe principal est situé dans l'axe de symétrie des côtés de connexion (10), avec une première extrémité (13.1) proximale à l'extrémité supérieure (9) du godet (5) et une seconde extrémité opposée (13.2), dans lequel l'arbre de connexion (12) des godets (5) est contenu dans l'axe principal du guide et, dans lequel :
- les moyens de basculement sont formés par un élément longitudinal (14) parallèle au convoyeur (4) avec une surface orientée vers ledit convoyeur qui présente un profil incurvé symétrique et convexe par rapport au profil (15) du convoyeur (4), avec une position de basculement active telle que le guide (13) du godet (5) en contact avec ledit profil incurvé (15), dans les deux sens d'avancement du godet (5), génère un basculement progressif de celui-ci dans le sens d'avancement, jusqu'à atteindre un basculement maximal du godet (5) dans la zone centrale (14.1) dudit profil incurvé (15).

2. Élévateur à godets réversible selon la revendication 1, **caractérisé en ce que**, dans la position de basculement active, le profil incurvé (15) du moyen de basculement présente une distance de séparation avec l'arbre de connexion (12) du godet (5) telle que, dans ses extrémités (14.2), elle est égale ou supérieure à la distance entre ledit arbre de connexion (12) et la seconde extrémité (13.2) de l'axe principal de guidage (13) et, dans la zone centrale (14.1) dudit profil incurvé (15), elle est inférieure à la moitié dudit axe secondaire de guidage (13).

3. Élévateur à godets réversible, selon l'une quelconque des revendications précédentes, **caractérisé en ce qu'**il comprend au moins deux zones de déchargement, avec des moyens de basculement dans chacune d'elles, dans lequel lesdits moyens de basculement présentent des moyens d'activation/désactivation formés par un mécanisme de déplacement de ceux-ci par rapport au cadre (3) à partir de la position active dans laquelle il y a contact entre le profil incurvé (15) avec le guide (13) du godet (5) jusqu'à une position passive dans laquelle les moyens de basculement sont disposés plus loin du convoyeur (4), évitant le contact de ceux-ci avec le guide (13) du godet (5).

4. Ascenseur à godets réversible selon la revendication 3, **caractérisé en ce que** le mécanisme de déplacement du moyen de basculement comprend un actionneur manuel.

5. Ascenseur à godets réversible selon la revendication 3, **caractérisé en ce que** le mécanisme de déplacement du moyen de basculement comprend un actionneur mécanique.

6. Élévateur à godets réversible, selon l'une quelconque des revendications précédentes, **caractérisé en ce que** les côtés de connexion (10) du godet (5) présentent une section frustoconique.

7. Élévateur à godets réversible, selon l'une quelconque des revendications précédentes, **caractérisé en ce que** le premier tronçon (1) comprend au moins deux tambours d'extrémité qui sont un premier tambour situé dans la première extrémité et un second tambour (6) situé dans la seconde extrémité (1.1) de celui-ci, dans lequel les premier et second tambours sont connectés par le convoyeur (4) à godets (5) et au moins l'un d'eux est connecté à des moyens de rotation.

8. Élévateur à godets réversible selon la revendication 7, **caractérisé en ce qu'**il comprend au moins un deuxième tronçon (2) situé à la suite du premier tronçon (1), qui forme un angle avec celui-ci et qui comprend un troisième tambour (7) situé dans l'extrémité (2.1) dudit deuxième tronçon (2).

9. Élévateur à godets réversible, selon la revendication 8, **caractérisé en ce qu'**il comprend au moins un second tambour supplémentaire (8) dans la seconde extrémité (1.1) du premier tronçon (1).

10. Élévateur à godets réversible selon la revendication 8 ou 9, **caractérisé en ce que** le deuxième tronçon (2) est horizontal.

11. Élévateur à godets réversible, selon l'une quelconque des revendications précédentes, **caractérisé en ce que** le premier tronçon (1) est vertical.
